(19) Europäisches Patentamt
European Patent Office
Office européen des brevets

(11) Veröffentlichungsnummer: **0 094 525**
**B1**

(12) # EUROPÄISCHE PATENTSCHRIFT

(45) Veröffentlichungstag der Patentschrift: **17.12.86**

(51) Int. Cl.⁴: **C 08 F 279/04**, C 08 F 291/02

(21) Anmeldenummer: **83103984.7**

(22) Anmeldetag: **23.04.83**

(54) **Pfropfkautschuke zur Modifizierung thermoplastischer Formmassen.**

(30) Priorität: **12.05.82 DE 3217874**

(43) Veröffentlichungstag der Anmeldung: **23.11.83 Patentblatt 83/47**

(45) Bekanntmachung des Hinweises auf die Patenterteilung: **17.12.86 Patentblatt 86/51**

(84) Benannte Vertragsstaaten: **BE DE FR GB IT NL**

(56) Entgegenhaltungen:
**FR-A-2 174 823**
**FR-A-2 207 941**
**US-A-3 574 151**

(73) Patentinhaber: **BAYER AG, Konzernverwaltung RP Patentabteilung, D-5090 Leverkusen 1 Bayerwerk (DE)**

(72) Erfinder: **Zabrocki, Karl, Dr., Edelfalter 33, D-4044 Büttgen (DE)**
Erfinder: **Pischtschan, Alfred, Dr., Zur Eiche 33, D-5067 Kürten (DE)**

**EP 0 094 525 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft Pfropfkautschuke, die im Gemisch mit thermoplastischen Formmassen zu Formkörpern mit erhöhter Zähigkeit führen, sowie ein Verfahren zur Herstellung dieser Pfropfkautschuke.

Pfropfkautschuke im Sinne der vorliegenden Erfindung sind durch radikalische Polymerisation mindestens eines vinylgruppenhaltigen Monomers in Gegenwart von mindestens einem Kautschuk hergestellte Polymerisate. Es ist bekannt, daß bei Zusatz derartiger Pfropfkautschuke, auch Pfropfprodukte genannt, zu thermoplastischen Formmassen die Zähigkeit daraus hergestellter Formkörper ansteigt. Beispielsweise läßt sich durch Zusatz von Pfropfkautschuken, die aus Polybutadienkautschuk und Styrol-Acrylnitril-Gemisch hergestellt werden, zu Copolymerisaten aus Styrol-Acrylnitril dessen Zähigkeit um den Faktor 5 bis 15 steigern.

Die zähigkeitsfördernde Wirkung eines Pfropfkautschuks ist von verschiedenen Faktoren abhängig. Gemäß der US-PS 3 793 403 steigt die Zähigkeit mit der eingesetzten Menge an Pfropfkautschuk und seiner Teilchengröße, allerdings zu Lasten anderer Produkteigenschaften, beispielsweise der Oberflächenbeschaffenheit. Es besteht daher Bedarf an Pfropfkautschuken mit relativ kleinen Teilchen, die, in kleinen Mengen zugesetzt, die Zähigkeit ausreichend verbessern.

Es wurde gefunden, daß Pfropfkautschuke, die durch radikalische Polymerisation eines vinylgruppenhaltigen Monomeren oder mehrerer solcher Monomeren in Gegenwart von mindestens einem Kautschuk und in Gegenwart von 0,001 bis 1,0 Gew.-% (bezogen auf festes Pfropfprodukt) mindestens einer Verbindung der Formel I

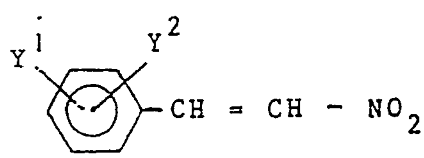 (I)

worin
$Y^1 Y^2 = H, C_1\text{-}C_{10}\text{-Alkyl}, NO_2, F, Cl, Br$
erhältlich sind, die geforderte Eigenschaft besitzen.

Diese Pfropfkautschuke können grundsätzlich mit allen bekannten Techniken wie Masse-, Lösungs-, Suspensionsoder Emulsionspolymerisation hergestellt werden, wobei mehrstufige Verfahrensweisen, z.B. durch Kombination von Masse- und Suspensionspolymerisation ebenfalls möglich sind. Bevorzugt angewendet wird die Emulsionspolymerisation, bei der ein Kautschuk als Latex vorgelegt und in seiner Gegenwart die Monomeren polymerisiert werden. Mit dieser Technik wird die Bildung sehr grober Pfropfkautschukteilchen, die die Oberflächenqualität verschlechtern, weitgehend oder vollständig zurückgedrängt. Die Ergebnisse sind besonders günstig, wenn der verwendete Kautschuk mindestens teilweise vernetzt ist.

Die Pfropfprodukte bilden sich nach einem radikalischen Mechanismus, der bevorzugt mit Hilfe radikalbildender Aktivatoren initiiert wird. Als solche kommen übliche organische und anorganische Peroxide, anorganische Persulfate, Azo-Initiatoren, sowie Redox-Systeme in Betracht, wobei letztere aus einem Oxidationsmittel, vorzugsweise Peroxid(e) und einem Reduktionsmittel bestehen und zusätzlich Schwermetallionen im Reduktionsmedium zugegen sind. Die Bildung der Pfropfprodukte wird gefördert, wenn im Kautschuk C=C-Doppelbindungen enthalten sind.

Die Molgewichte der Pfropfäste können in bekannter Weise durch Zusatz von Reglern wie längerkettigen Mercaptanen, α-Olefinen oder Terpinolen eingestellt werden. Die Temperaturen liegen in der Regel zwischen 25° und 160°C, vorzugsweise 40° bis 90°C.

Werden die Pfropfpolymerisate durch Masse-Polymerisation hergestellt, so wird von einer Lösung des unvernetzten Kautschuks ausgegangen und nach Durchlaufen einer Phaseninversion in Masse oder Suspension auspolymerisiert. Die bei Masse- und Suspensionsverfahren einzuhaltenden Reaktionsbedingungen sind generell bekannt. Prinzipiell ist es auch möglich, teilweise vernetzte Kautschuke nach Umdispergierung in eine Monomerphase in Massepolymerisation zu pfropfen, wie z.B. in DE-OS 2 047 427 dargestellt.

Für die Pfropfpolymerisation in Lösung kommen als Lösungsmittel aromatische Kohlenwasserstoffe infrage.

Bei der bevorzugten Emulsionspfropfung werden übliche Emulgatoren, z.B. Alkylsulfate, Aralkylsulfonate, Alkalisalze gesättigter und ungesättigter Fettsäuren, sowie Alkalisalze disproportionierter oder hydrierter Harzsäuren wie Abietin- oder Tallölsäuren verwendet. Die Aktivierung erfolgt hier in der Regel mittels anorganischer Perverbindungen oder Redox-Systeme.

Wird bei diesen Verfahren nur bis zu nicht vollständigem Umsatz polymerisiert, so können die nicht umgesetzten Monomeren bzw. Lösemittel nach üblichen Techniken, z.B. Schneckeneindampfung, Dünnschichtverdampfung, entfernt werden.

Bei Lösungs-, Masse- und Suspensionsverfahren fallen die Pfropfprodukte bei Entfernung flüchtiger Bestandteile direkt als Festsubstanzen an und können so weiterverarbeitet werden. Emulsionspolymerisate können z.B. durch Zusatz von Salzen und/oder Säuren ausgefällt, gewaschen und getrocknet werden. Es ist aber ebenfalls möglich, Pfropfprodukte und - soweit verfügbar - thermoplastische Matrix als Latices zu vermischen und gemeinsam auszufällen.

Verwendete Kautschuke müssen eine Glastemperatur unterhalb von 0°C besitzen. Geeignet sind z.B.

- Dienkautschuke, d.h., Homopolymerisate von konjugierter Dienen mit 4 bis 8 C-Atomen wie Butadien, Isopren, Chloropren oder deren Copolymerisate mit bis zu 60 Gew.-%, bevorzugt 1 bis 30 Gew.-% eines Vinylmonomeren, z.B. Acrylnitril, Methacrylnitril, Styrol, α-Methylstyrol, Halogenstyrole, $C_1$-$C_4$-Alkylstyrole, $C_1$-$C_6$-Alkylacrylate und -methacrylate, Alkylenglykoldi-acrylate und -methacrylate, sowie Divinylbenzol;
- Acrylatkautschuke, d.h., Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschuk-Homo- bzw. Copolymerisate eingesetzt, die 0,01 bis 8 Gew.-% Divinyl- oder Polyalkylverbindungen und/oder N-Methylolacrylamid- (oder -methacrylamid)-Derivate enthalten, die als Vernetzer wirken, z.B. Divinylbenzol, Triallylcyanurat, und wobei der Kautschuk C=C-Doppelbindungen enthält.
- Terpolymer-Kautschuke, d.h. Copolymerisate aus monoolefinischen Kohlenwasserstoffen, z.B. Ethylen, Propylen und Dienen, z.B. Butadien, Cyclopentadien.

Bevorzugt sind Polybutadienkautschuke, SBR-Kautschuke mit bis zu 30 Gew.-% einpolymerisiertem Styrol und Acrylatkautschuke, besonders solche, die eine Kern-Mantel-Struktur aufweisen, wie in DE-OS 30 06 804 beschrieben, sowie EPDM-Kautschuke.

Bei der Emulsionspolymerisation werden die Kautschuke als vorgebildete Partikel eingesetzt, deren Teilchengröße durch die Herstellungsweise des Latex bestimmt ist. Zur Herstellung der erfindungsgemäßen Pfropfprodukte kommen Latices mit mittleren Teilchendurchmessern, gemessen als $d_{50}$-Wert der Teilchengrößenverteilung der Ultrazentrifugen-Messung nach Svedberg (siehe DE-OS 12 69 360), von 0,05 bis 1,5 µm, vorzugsweise 0,1 bis 0,6 µm, in Betracht. Gemische mehrerer Latices können ebenfalls verwendet werden (vergl. DE-OS 18 13 719).

Die Pfropfpolymerisate können erfindungsgemäß hergestellt werden durch Polymerisation der Pfropfmonomeren in Gegenwart des Kautschuks, auch Pfropfgrundlage genannt, sowie in Gegenwart von Verbindungen der Formel I.

Als Pfropfmonomere werden vinylgruppenhaltige Monomere mit 1 bis 3 polymerisierbaren Doppelbindungen als Einzelverbindungen oder Gemische eingesetzt. Vorzugsweise verwendet man Verbindungen mit einer Vinylgruppe, z.B. Styrol, $C_1$-$C_4$-alkylsubstituierte Styrole, halogensubstituierte Styrole, α-Methylstyrol, (Meth)Acrylnitril, Ester der (Meth)Acrylsäure mit $C_1$-$C_8$-aliphatischen oder cycloaliphatischen Alkoholen, Glycidyl(meth)acrylat, Hydroxyethyl(meth)acrylat, Hydroxyprcpyl(meth)acrylat, (Meth)Acrylsäure, Itaconsäure, Mono- und Bis-Ester von Malein- und Fumarsäure, Inden. Besonders bevorzugt sind Styrol, Methylmethacrylat und Gemische aus Styrol und Acrylnitril.

Die einzusetzenden Mengen an Pfropfmonomeren betragen 900 bis 10, vorzugsweise 250 bis 15 Gew.-Teile Monomer(gemisch) pro 100 Gew.-Teile Kautschuk (gerechnet als Festsubstanz).

Durch Variation dieses Verhältnisses, sowie gegebenenfalls durch Zusatz von Kettenüberträgern, bei Polymerisation in wäßriger Phase zusätzlich durch die Wahl der Art und Menge von Zusatzstoffen wie Suspensionsstabilisatoren, Emulgatoren läßt sich der Pfropfgrad G (= die Masse des chemisch auf der Pfropfgrundlage gebundenen Polymeren pro Masseeinheit der Pfropfgrundlage) und die Pfropfastlänge einstellen, sowie das Molgewicht des als Nebenprodukt entstehenden, nicht chemisch gebundenen Polymeren beeinflussen. Diese Größen bestimmen die Eigenschaften des Pfropfproduktes mit: mischt man solche Pfropfprodukte in vorgegebener Menge Thermoplasten zu, so steigt beispielsweise die Zähigkeit des Blends mit zunehmendem Pfropfgrad in der Regel bis zu einem Maximalwert an und fällt danach wieder ab. Die Lage des Maximums hängt von der Beschaffenheit des Kautschuks ab. Geeignete Pfropfgrade sind 0,1 bis 2,0, vorzugsweise 0,2 bis 1,0. Das Molgewicht ($M_w$) des bei der Pfropfung als Nebenprodukt erhaltenen freien Polymeren ist in der Regel 15000 bis 250000. Erfindungsgemäß werden bei der Pfropfpolymerisation 0,001 bis 1,0 Gew% (bezogen auf festes Pfropfpolymerisat) an Verbindungen der Formel 1

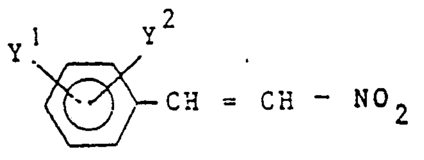
(I)

worin
$Y^1$, $Y^2$ = H, $C_1$-$C_{10}$-Alkylrest, $NO_2$, F, Cl, Br
zugesetzt.

Beispiele geeigneter Verbindungen der Formel I sind:
β-Nitrostyrol, 4,6-Dimethyl-β-nitrostyrol, p-Methyl-β-nitrostyrol, 2,6-Dinitro-β-nitrostyrol, p-Nitroβ-nitrostyrol. Besonderen Vorzug verdient β-Nitrostyrol ($Y^1$ = H, $Y^2$ = H); die bestgeeigneten Einsatzmengen dafür liegen bei 0,01 bis 0,20 Gew.-Teilen pro 100 Teile festes Pfropfpolymerisat.

Die Verbindung der Formel 1 kann der polymerisierenden Mischung entweder allmählich entsprechend dem Verlauf der Reaktion oder insgesamt zu Beginn der Pfropfpolymerisation zugegeben werden. Zur allmählichen Zugabe kann die Verbindung der Formel 1 im Monomer(gemisch) gelöst werden. Besonders gute Wirksamkeit wird durch einmalige Zugabe der gesamten vorgesehenen Menge bei Beginn der Pfropfpolymerisation erreicht. Bei dieser Zugabeweise wird die Verbindung der Formel 1 zweckmäßig in kleinen Mengen Monomeren oder in einem geeigneten Lösemittel, z.B. Toluol, gelöst und dem Kautschuk zugemischt.

Die erfindungsgemäßen Pfropfprodukte können als Modifikatoren zur Erhöhung der Zähigkeit einzelner oder aus verschiedenen Materialien abgemischter thermoplastischer Formmassen dienen. Beispiele für modifizierbare thermoplastische Formmassen sind:

a) Homo- und Mischpolymerisate von Styrol und alkylsubstituiertem Styrol mit vinylgruppenhaltigen Monomeren, z.B. Polystyrol, Poly(p-methyl)-styrol, Poly(styrol-co-acrylnitril), Poly(α-methylstyrol-coacrylnitril), Poly(styrol-co-maleinsäureanhydrid), Poly(styrol-co-acrylnitril-co-maleinsäure-N- phenylimid),

b) Homo- und Mischpolymerisate von $C_1$-$C_4$-Alkyl-(meth)-acrylaten mit vinylgruppenhaltigen Monomeren, z.B. Polymethylmethacrylat, Poly(methylmethacrylat-coacrylnitril),

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,,

e) Polyester, z.B. auf Basis Terephthalsäure, Isophthalsäure, Ethylenglykol, Butandiol,

f) Polyamide, z.B. auf Basis von ε -Caprolactam, Laurinlactam, Adipinsäure/Hexamethylendiamin.

Besonders günstige Ergebnisse erhält man in Formmassen gemäß a) und b), insbesondere in Styrol-Acrylnitril-Copolymerisaten. Verwendet man in diesem Fall Pfropfprodukte, die Styrol und Acrylnitril gepfropft enthalten, so entstehend ABS-Produkte mit hoher Zähigkeit und guter Oberfläche.

Für die Modifizierung von Formmassen verwendet man die erfindungsgemäßen Pfropfkautschuke in Mengen von 1 bis 80, vorzugsweise 5 bis 50 Gew.-%, bezogen auf die gesamte Formmasse. Zu ihrer Herstellung kann man übliche Mischaggregate wie Walzenstühle, Mischextruder, Innenkneter verwenden. Beim Vermischen ocer an anderen Stellen der Aufarbeitung, Weiterverarbeitung und Endformung können der Formmasse erforderliche bzw. für das Einsatzgebiet zweckmäßige Additive zugesetzt werden, z.B. Antioxidantien, Antistatika, Gleitmittel, Flammschutzmittel, Füll- und Verstärkerstoffe, Farbmittel.

Die modifizierten Formmassen können auf üblichen Verarbeitungsmaschinen thermoplastisch verformt werden, z.B. durch Spritzguß, Plattenextrusion mit anschließender Warmverformung oder Extrusion (für Rohre und Profile).

In den folgenden Beispielen sind Teile immer Gewichtsteile und % immer Gew.-%, wenn nicht anders angegeben.

**Beispiele**

**Vergleichsversuch a), Beispiele 1 bis 3**

50 Teile (gerechnet als Feststoff) eines durch radikalische Polymerisation hergestellten anionisch emulgierten Polybutadienlatex mit einem $d_{50}$-Wert von ca. 0,27 µm wurden mit Wasser auf einen Festgehalt von ca. 20 % gebracht und die in der Tabelle I angegebenen Mengen β-Nitrostyrol (gerechnet als Feststoff) in 30%iger Lösung in Toluol eingerührt. Die Mischung wurde auf ca. 65°C erwärmt, 0,5 Tle $K_2S_2O_8$ zugefügt und danach 50 Tle eines Gemisches aus Styrol/Acrylnitril (72: 28) sowie 2 Teile (gerechnet als Festsubstanz) Na-Salz eines Harzsäuregemisches, gelöst in alkalisch eingestelltem Wasser, über 4 Stunden zudosiert. Nach einer 4-

stündigen Nachreaktionszeit bei 65°C wurde der Pfropflatex nach Zugabe von ca. 1,0 Teil eines phenolischen Antioxidans mit $MgSO_4$ koaguliert und nach dem Waschen das resultietende Pulver bei 70°C im Vakuum getrocknet.

50 Teile dieses Pfropfpolymerisats wurden mit 50 Teilen eines Styrol/Acrylnitril-Harzes (72: 28, $M_w$ ca. 115000; Tyril 790 der Dow Chemical), 2 Teilen Ethylendiamin-bis-stearoylamid und 0,2 Teilen eines Siliconöls in einem Innenkneter vermischt und anschließend zu Normkleinstäben bzw. einer Platte (zur Glanzbeurteilung) verspritzt. Ergebnisse sind in Tabelle 1 zusammengefaßt. Der Glanz ist gemäß DE-OS 24 20 358 beurteilt.

**Tabelle I**

| | Vergleichs-versuch a) | Beispiele 1 | 2 | 3 |
|---|---|---|---|---|
| Zugesetzte Menge β-Nitrostyrol (Tle) | - | 0,05 | 0,10 | 0,20 |
| Kerbschlagzähigkeit nach DIN 53543 20°C /kJ/m²7 | 20,8 | 21,7 | 24,5 | 27,7 |
| -40°C | 14,2 | 14,2 | 15,0 | 14,3 |
| Kugeldruckhärte nach DIN 53546 /N/mm²7 | 76 | 78 | 77 | 78 |
| Wärmestandfestigkeit nach Vicat B | 91 | 90 | 91 | 91 |
| Glanzbeurteilung Skala A-H | F | F | E | D |

**Vergleichsversuch b, Beispiele 4 bis 5**

50 Teile (gerechnet als Feststoff) eines durch radikalische Polymerisation hergestellten, anionisch emulgierten Polybutadienlatex mit einem $d_{50}$-Wert von ca. 0,27 µm wurden auf einen Festgehalt von ca. 20 % gebracht und die in Tabelle II angegebenen Mengen β-Nitrostyrol (gerechnet als Feststoff) in 30%iger Lösung in Toluol eingerührt. Dann wurden 0,75 Tle Dextrose zugefügt sovie Spuren komplettierter $Fe^{2t}$-Ionen zugefügt, auf 50°C erwärmt und anschließend gleichzeitig 50 Tle einer Mischung aus Styrol und Acrylnitril (72: 28), sowie verdünnte, alkalisch eingestellte wäßrige Emulsion aus 0,2 Teilen Diisopropylbenzolhydroperoxid und 2,0 Tln Harzsäure-Seife während ca. 3 Stunden zudosiert. Das Reaktionsprodukt wird noch einige Zeit bei 65°C gehalten und dann wie in Beispiel 1 bis 3 aufgearbeitet, in eine Formmasse umgewandelt und geprüft. Ergebnisse zeigt die Tabelle II.

**Tabelle II**

| | Vergleichsversuch b) | Beispiele 4 | Beispiele 5 |
|---|---|---|---|
| Zugesetzte Menge ß-Nitrostyrol (Teile) | - | 0,05 | 0,10 |
| Kerbschlagzähigkeit nach DIN 53543 20°C /kJ/m² 7 | 20,4 | 22,5 | 25,1 |
| -40°C | 11,5 | 13,3 | 16,5 |
| Kugeldruckhärte nach DIN 53546 /N/mm² 7 | 62 | 63 | 64 |
| Wärmestandfestigkeit nach Vicat B | 88 | 88 | 88 |
| Glanzbeurteilung Skala A-H | F | E | D |

**Patentansprüche**

1. Pfropfkautschuke erhältlich durch radikalische Polymerisation eines vinylgruppenhaltigen Monomeren oder mehrerer solcher Monomerer in Gegenwart von mindestens einem Kautschuk, dadurch gekennzeichnet, daß die Polymerisation in Gegenwart von 0,001 bis 1,0 Gew.-% (bezogen auf festes Pfropfprodukt) mindestens einer Verbindung der Formel I

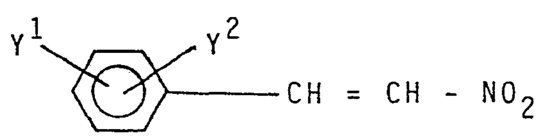

(I)

worin
$Y^1$ $Y^2$ = H, $C_1$-$C_{10}$-Alkyl, $NO_2$, F, Cl, Br
durchgeführt wird.

2. Pfropfkautschuke gemäß Anspruch 1, dadurch gekennzeichnet, daß die vinylgruppenhaltigen Monomeren (Alkyl)Styrol(e), (Meth)Acrylnitril und/oder (Meth)-Acrylsäureester sind.

3. Pfropfkautschuke gemäß Anspruch 1, dadurch gekennzeichnet, daß als Kautschuk ein Polybutadien-, Styrol-Butadien-Copolymer- oder Acrylatkautschuk verwendet wird.

4. Pfropfkautschuke gemäß Anspruch 1, dadurch gekennzeichnet, daß der Kautschuk C=C-Doppelbindungen enthält.

5. Pfropfkautschuke gemäß Anspruch 1, dadurch gekennzeichnet, daß die Polymerisation in Emulsion durchgeführt wird.

6. Pfropfkautschuke gemäß Anspruch 1, dadurch gekennzeichnet, daß die Verbindung I β-Nitrostyrol ist.

7. Verwendung von Pfropfkautschuken gemäß Anspruch in Mengen von 1 bis 80 Gew.-% (bezogen auf fertige Mischung) zur Herstellung kautschukmodifizierter thermoplastischer Formmassen.

8. Verwendung von Pfropfkautschuken gemäß Ansprüchen 1 und 2 zur Herstellung von ABS-Formmassen.

**Claims**

1. Graft rubbers obtainable by radical-polymerisation of one vinyl-group-containing monomer or more than one such monomer in the presence of at least one rubber, characterised In that the polymerisation is carried out in the presence of 0.001 to 1.0% by weight (based on solid graft product) of at least one compound of the formula I

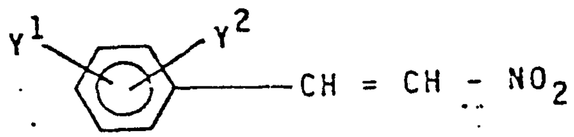 (I)

wherein
$Y^1$ and $Y^2$ = H, $C_1$-$C_{10}$-alkyl, $NO_2$, F, Cl or Br.

2. Graft rubbers according to Claim 1, characterised in that the vinyl-group-containing monomers are (alkyl)styrene(s), (meth)acrylonitrile and/or (meth)acrylic acid esters.

3. Graft rubbers according to Claim 1, characterised in that a polybutadiene, styrene-butadiene-copolymer or acrylate rubber is used as the rubber.

4. Graft rubbers according to Claim 1, characterised in that the rubber contains C=C double bonds.

5. Graft rubbers according to Claim 1, characterised in that the polymerisation is carried out in emulsion.

6. Graft rubbers according to Claim 1, characterised in that the compound 1 is β-nitrostyrene.

7. Use of graft rubbers according to Claim 1 in quantities of 1 to 80% by weight (based on the final mixture) for the production of rubber-modified thermoplastic moulding compositions.

8. Use of graft rubbers according to Claims 1 and 2 for the production of ABS moulding compositions.

**Revendications**

1. Caoutchoucs greffés que l'on obtient par polymérisation radicalaire d'un monomère contenant des groupes vinyle ou de plusieurs monomères de ce type en présence d'au moins un caoutchouc, caractérisés en ce qu'on effectue la polymérisation en présence de 0,001 à 1% en poids (calculé sur le produit greffé solide) d'au moins un composé de formule I:

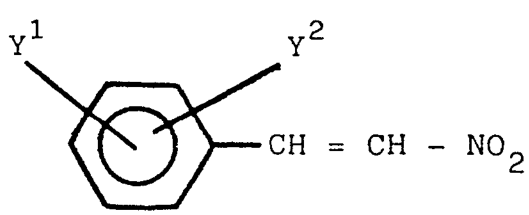 (I)

dans laquelle
$Y^1$, $Y^2$ = H, alkyle en $C_1$-$C_{10}$, $NO_2$, F, Cl, Br.

2. Caoutchoucs greffés selon la revendication 1, caractérisés en ce que les monomères contenant des groupes vinyle sont des (alkyl)styrène(s), le (méth)acrylonitrile et/ou les esters d'acide (méth)acrylique.

3. Caoutchoucs greffés selon la revendication 1, caractérisés en ce que, comme caoutchouc, on utilise un caoutchouc de polybutadiène, d'un copolymère de styrène/butadiène ou d'acrylate.

4. Caoutchoucs greffés selon la revendication 1, caractérisés en ce que le caoutchouc contient des doubles liaisons C=C.

5. Caoutchoucs greffés selon la revendication 1, caractérisés en ce que la polymérisation est effectuée en émulsion.

6. Caoutchoucs greffés selon la revendication 1, caractérisés en ce que le composé I est le β-nitrostyrène.

7. Utilisation de caoutchoucs greffés selon la revendication 1 en quantités de 1 à 80% en poids (calculé sur le mélange définitif) pour la fabrication de matières à mouler thermoplastiques modifiées par un caoutchouc.

8. Utilisation de caoutchoucs greffés selon les revendications 1 et 2 pour la fabrication de matières à mouler d'ABS.